# EUROPÄISCHE PATENTANMELDUNG

(11) **EP 3 037 601 A1**
(43) Veröffentlichungstag der Anmeldung: **29.06.2016**
(21) Anmeldenummer: 14199858.3
(22) Anmeldetag: 22.12.2014
(51) Int. Cl.: E04C 2/36, B32B 5/02, B32B 7/04, B32B 7/14, B32B 29/02, B32B 29/06, B32B 37/00, B32B 3/12, B32B 15/00, B32B 27/00, B32B 27/40, B32B 29/00

(54) **Wabenkernaufbau**

(71) Anmelder: Magna Steyr Fahrzeugtechnik AG & Co KG, 8041 Graz (AT)
(72) Erfinder: Dietz, Wolfgang, 8081 Pirching (AT); Drezga, Danijel, 4910 Ried im Innkreis (AT); Wolfsberger, Günter, 8501 Lieboch (AT)
(74) Vertreter: Zangger, Bernd

(57) **Zusammenfassung**

Ein Wabenkernaufbau, umfassend zumindest zwei Wabenkerne (1, 2) und eine zwischen den Wabenkernen (1, 2) angeordnete Verbindungsschicht (3), wobei die Verbindungsschicht (3) gasdurchlässig ausgebildet ist und lediglich im Bereich der Stege der Wabenkerne (1, 2) Klebstoff zur Verklebung mit den Wabenkernen (1, 2) aufweist und ein Verfahren zur Herstellung eines Wabenkernaufbaus, sowie ein Verfahren zur Herstellung eines Sandwichbauteils mit einem Wabenkernaufbau und ein solches Sandwichbauteil.

## Beschreibung

### Gebiet der Erfindung

Die vorliegende Erfindung betrifft einen Wabenkernaufbau, umfassend zumindest zwei Wabenkerne und eine zwischen den Wabenkernen angeordnete Verbindungsschicht. Die Erfindung betrifft auch ein Verfahren zur Herstellung eines solchen Wabenkernaufbaus und ein Verfahren zur Herstellung eines Sandwichbauteils sowie ein solches Sandwichbauteil.

### Stand der Technik

Wabenkerne werden üblicherweise als mittlere Schicht zwischen zwei Deckschichten in einem Sandwichbauteil verwendet, dass beispielsweise im Automobilbau als Karosseriebauteil eingesetzt werden kann. Meist werden flächige Sandwichbauteile erzeugt, deren Form nötigenfalls in einer Formpresse angepasst werden kann. Durch Pressen eines Wabenkernes ("Crush-Core Verfahren") wird jedoch die Festigkeit des Wabenkernes verringert, auch werden Materialkosten und Gewicht in Bereichen verringerter Dicke nicht eingespart.

Zur Herstellung komplizierterer dreidimensionaler Formen von Sandwichbauteilen und entsprechender Wabenkerne, beispielsweise von Wabenkernen mit Dickensprüngen, ist es bekannt einen Wabenkern entsprechend der größten gewünschten Dicke herzustellen und danach den Wabenkern in Bereichen gewünschter geringerer Dicke zu beschneiden. Dabei entsteht jedoch oft ein erheblicher Verschnitt der nicht weiter genützt werden kann.

Es ist auch bekannt zwei oder mehrere flächige ("zweidimensionale") Wabenkerne, beispielsweise unterschiedlicher Größe, miteinander zu verkleben, wobei eine Verklebung der Stege miteinander technisch kaum machbar ist und daher eine Zwischenschicht mit zweiseitigem Kleberauftrag zwischen den Wabenkernen genutzt wird, beispielsweise ein Klebefilm oder Klebepapier. Jedoch können so aufgebaute "dreidimensionale" Wabenkerne nur eingeschränkt weiter verarbeitet werden, da die Zwischenschicht ein Hindernis für manche Verfahren, wie eine spätere Formgebung in Presswerkzeugen, darstellt.

### Zusammenfassung der Erfindung

Es ist eine Aufgabe der Erfindung, einen Wabenkernaufbau anzugeben der dreidimensionale Strukturen abbilden und auch flexibel weiter bearbeitet werden kann, sowie ein Verfahren zur Herstellung eines solchen Wabenkernaufbaus anzugeben, sowie ein entsprechendes Verfahren zur Herstellung eines Sandwichbauteils aus einem solchen Wabenkernaufbau, sowie ein entsprechendes Sandwichbauteil.

Die Lösung der Aufgabe erfolgt durch einen Wabenkernaufbau, umfassend zumindest zwei Wabenkerne und eine zwischen den Wabenkernen angeordnete Verbindungsschicht, wobei die Verbindungsschicht gasdurchlässig ausgebildet ist und lediglich im Bereich der Stege der Wabenkerne Klebstoff zur Verklebung mit den Wabenkernen aufweist.

Erfindungsgemäß wird daher eine Verbindungsschicht als Zwischenschicht zwischen zwei Wabenkernen verwendet um diese miteinander zu verbinden, jedoch wird kein flächiger Kleberauftrag auf die Verbindungsschicht vorgenommen und diese generell gasdurchlässig ausgebildet. Hierdurch wird sicher gestellt dass die beiden Wabenkerne gasdurchlässig, insbesondere luftdurchlässig, miteinander verbunden sind, so dass ein in den Hohlräumen zwischen den Stegen der Wabenkerne eingeschlossenes Medium wie Luft durch die Verbindungsschicht diffundieren kann, wodurch auch ein Druckausgleich zwischen den Wabenkernen ermöglicht wird.

Natürlich können auch mehr als zwei Lagen von Wabenkernen erfindungsgemäß miteinander verbunden werden, wobei bevorzugt jeweils gasdurchlässige Verbindungsschichten zwischen den benachbarten Wabenkern-Lagen eingesetzt werden.

Vorzugsweise werden die Wabenkerne lediglich an deren Steg-Enden mit der Verbindungsschicht verklebt.

Als Wabenkernformen kommen alle erdenklichen Hohlräume und Stege aufweisende geometrische Formen in Frage, beispielsweise bienenwabenförmige oder wellenförmige oder runde, dreieckige, rechteckige, quadratische, trapezförmige, vieleckige und so weiter, wobei es sich hierbei (innerhalb eines Wabenkernes) nicht um regelmäßig wiederkehrende Formen handeln muss.

Vorteilhaft ist dass die zwei Wabenkerne voneinander verschieden ausgebildet sein können und daher mit unterschiedlichen Eigenschaften ausgestattet sein können. Insbesondere können Wabenkerne mit unterschiedlicher Wabenform, Wabengröße, Wabenausrichtung und/oder Wabenmaterial gestapelt und miteinander verbunden werden. Dies ist vor allem deshalb vorteilhaft, weil dadurch das spätere fertige Bauteil partiell mit unterschiedlichen Funktions- bzw. Bauteileigenschaften ausgestattet werden kann. Einerseits soll das Bauteil eine bestimmte erforderliche Festigkeit und Steifigkeit aufweisen andererseits soll es aber an bestimmten Stellen weiche, leichter verformbare Zonen beinhalten, wie es beispielsweise zur Vermeidung von Verletzungen bei Kollisionen mit Fußgängern vorteilhaft ist.

Die Verbindungsschicht ist bevorzugt eine Fasern umfassende Lage, insbesondere ein Fasermaterial, beispielsweise ein Faserhalbzeugmaterial, aus Gewebe, Gelege, Gestrick, Gitter, Matten und / oder Vlies wobei die Fasern beispielsweise Naturfasern - zum Beispiel Flachsfasern, Hanf oder Bambus - oder Glasfasern, Kohlenstofffasern, Keramikfasern, Textilfasern oder Kunststofffasern sein können. Auch Verstärkungen mit Papier oder Nano-Partikel sind möglich. Möglich wäre auch, dass die Verbindungsschicht gänzlich aus Papier oder Karton oder aus einem anderen zellulosebasierten Material besteht. Hierzu ist es jedoch erforderlich, dass die Bereiche zwischen den Stegen gasdurchlässig gelassen sind. Die Verbindungsschicht kann hierbei aus einer oder mehreren Fasermaterial- bzw. Faserhalbzeugmaterial-Schichten bestehen.

Vorzugsweise ist die Verbindungsschicht mit Kurz- oder Langfasern verstärkt. Insbesondere kann das Material Nano-Partikel umfassen.

Die Wabenkerne sind vorzugsweise Papierkerne, Kartonkerne oder aus anderen auf Zellulose basierten Materialien, können aber auch Kerne aus Kunststoff, wie PU, PP und ähnliches oder aus Metall, Holz oder Schaummaterial sein.

Die Wabenkerne können Stege in bienenwabenförmiger Anordnung aufweisen oder in wellenförmiger Anordnung. Die Stege können jedoch auch runde, dreieckige, rechteckige, quadratische, trapezförmige oder vieleckige Zellen ausbilden.

Ein erfindungsgemäßes Verfahren zur Herstellung eines Wabenkernaufbaus umfasst bevorzugt die Schritte
- Bereitstellen der zwei Wabenkerne und der Verbindungsschicht,
- Aufbringen von Klebstoff auf die Steg-Enden der beiden Wabenkerne,
- Zusammenfügen der Wabenkerne mit der dazwischen angeordneten Verbindungsschicht, das heißt an die Verbindungsschicht wird an jeder der beiden Seiten ein Wabenkern gefügt.

Das "Zusammenfügen" kann insbesondere durch Auflegen erfolgen, wobei bevorzugt auch ein Drücken oder Pressen des Stapels erfolgt.

Hierbei können als Verbindungsschicht insbesondere trockene Fasermatten verwendet werden.

Anstatt den Klebstoff auf die Steg-Enden der beiden Wabenkerne aufzubringen kann der Klebstoff auch auf die Verbindungsschicht im Bereich der Steg-Enden der beiden Wabenkerne aufgebracht werden. Dies kann insbesondere durch die Verwendung von vorimprägniertem Fasermaterial erfolgen, wobei jedoch die Bereiche zwischen den Stegen gasdurchlässig gelassen sind.

Der Klebstoff wird bevorzugt durch Rollen, Sprühen, Streichen oder Eintauchen auf die Stege und/oder die Verbindungsschicht aufgebracht, bevorzugt auf die Stege von beiden Wabenkernen.

Nach dem Zusammenfügen der Wabenkerne mit der Verbindungsschicht wird bevorzugt das Bauteil, nämlich der Stapel gebildet aus den Wabenkernen mit dazwischen angeordneter Verbindungsschicht, mit trockenem Fasermaterial , ein- oder beidseitig, also oben und/oder unten am Stapel, belegt, beispielsweise ummantelt, wobei das Fasermaterial einen Überstand über die Wabenkerne aufweisen kann oder auch keinen Überstand aufweist. Anschließend wird das Fasermaterial mit einer Matrix, vorzugsweise mit einer PUR-Matrix getränkt, besprüht und/oder benetzt. Hierdurch können insbesondere Deckschichten erstellt werden und somit ein Sandwichbauteil hergestellt werden.

Als Matrix bzw. Matrixmaterial kommen bevorzugt thermoplastische oder duroplastische Kunststoffe zur Anwendung.

Als Klebstoff zur Verklebung der Verbindungsschicht mit den Wabenkernen kann das Matrixmaterial verwendet werden, oder auch ein anderer Klebstoff.

Unter Fasermaterial ist hier sowohl Faserverbundmaterial als auch Faserhalbzeugmaterial zu verstehen.

Unter Fasermaterial sind beispielsweise Gewebe, Gelege, Gestricke, Gitter, Matten und / oder Vlies zu verstehen, wobei die Fasern beispielsweise aus Naturfasern, Flachsfasern, Glasfasern, Kohlenstofffasern, Kunststofffasern, Keramikfasern oder Textilfasern bestehen.

Das Fasermaterial kann eine Matrix bereits enthalten oder noch nicht enthalten, insbesondere kann die Matrix auch ein aus zwei oder mehr Komponenten bestehendes Material wie Harz mit Härter sein. Hierbei ist auch die Verwendung von Kunststoff bzw. Kunststoffharz möglich, welchem bereits kleine Faserschnösel beigemischt sind und dieses so auf den Stapel aus Wabenkernen und Verbindungsschicht als Deckschicht aufgetragen wird.

Statt mit einem trockenen Fasermaterial kann der Papierwabenkern auch bereits mit einem mit einer Matrix vorimpregnierten Fasermaterial (prepreg), beispielsweise einem thermoplastischen oder duroplastischen Kunststoff, auf der Ober- und Unterseite belegt bzw. ummantelt werden.

Auch das Aufbringen eines noch flüssigen Faserverbundmaterials wäre zur Erzeugung einer Deckschicht möglich.

Anschließend kann das Bauteil in einem, bevorzugt beheizten, Formpresswerkzeug formgepresst werden.

Bis zur Erreichung einer ausreichenden Festigkeit der Matrix kann das Bauteil in dem Formpresswerkzeug verbleiben.

Ein solches Sandwichbauteil kann als flächiges Bauteil eines Kraftfahrzeuges verwendet werden, insbesondere als Frontklappe, Tür, Dach, Heckklappe, Ladeboden, Abdeckung, Karosserieboden oder Torsionskasten.

### Kurzbeschreibung der Zeichnungen

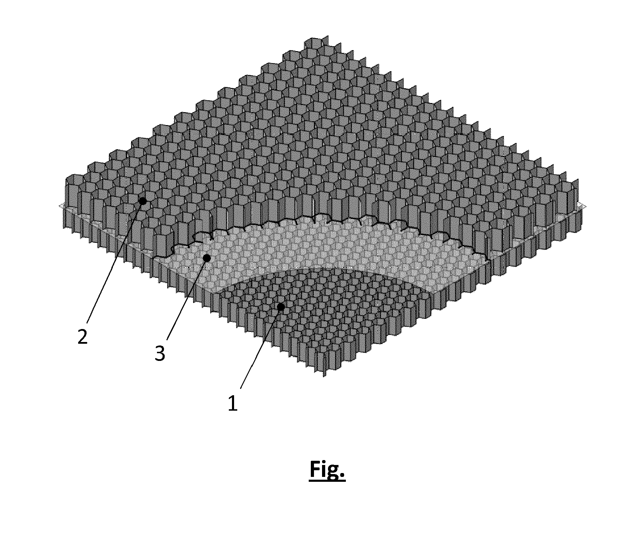

Die Erfindung wird im Folgenden beispielhaft unter Bezugnahme auf die Zeichnung beschrieben.
- Fig.: ist eine dreidimensionale Darstellung eines erfindungsgemäßen Wabenkernaufbaus.

### Beschreibung der Erfindung

In der Fig. ist ein erfindungsgemäßer Wabenkernaufbau dargestellt. Der Wabenkernaufbau umfasst zwei Wabenkerne 1 und 2 und eine zwischen den Wabenkernen 1, 2 angeordnete Verbindungsschicht 3.

Die Wabenkerne 1, 2 sind Papierwabenkerne in Bienenwabenstruktur, also mit Sechskantzellen, wobei die zwei Wabenkerne 1, 2 voneinander verschieden ausgebildet sind, indem Wabenkern 1 eine andere Wabengröße aufweist als Wabenkern 2.

Die Verbindungsschicht 3 wird als Zwischenschicht zum beidseitigen Kleben verwendet, so dass die Verbindungsschicht 3 an einer Seite mit dem Wabenkern 1 und an der zweiten Seite mit dem Wabenkern 2 verklebt ist.

Klebstoff ist auf der Verbindungsschicht 3 lediglich im Bereich der Stege der Wabenkerne 1, 2 vorhanden. Dort sind die Enden der Stege der Wabenkerne 1, 2 mit der Verbindungsschicht 3 verklebt.

Die Verbindungsschicht 3 ist beispielsweise ein Vlies, eine Naturfaser (zum Beispiel Flachsfaser, Hanf, Bambus etc.) Glasfaser oder Kohlefaser und jedenfalls gasdurchlässig ausgebildet. Dadurch dass auch Klebstoff der den Gasdurchtritt verhindern könnte nicht flächig auf der Verbindungsschicht 3 aufgetragen ist, bleibt ein Luftaustausch und somit ein Druckausgleich zwischen den Wabenkernen 1, 2 möglich.

### Bezugszeichenliste

- 1: Wabenkern
- 2: Wabenkern
- 3: Verbindungsschicht

## Patentansprüche

1. Wabenkernaufbau, umfassend zumindest zwei Wabenkerne (1, 2) und eine zwischen den Wabenkernen (1, 2) angeordnete Verbindungsschicht (3),
**dadurch gekennzeichnet, dass** die Verbindungsschicht (3) gasdurchlässig ausgebildet ist und lediglich im Bereich der Stege der Wabenkerne (1, 2) Klebstoff zur Verklebung mit den Wabenkernen (1, 2) aufweist.

2. Wabenkernaufbau, nach Anspruch 1,
**dadurch gekennzeichnet, dass** die Wabenkerne (1, 2) lediglich an deren Steg-Enden mit der Verbindungsschicht (3) verklebt sind.

3. Wabenkernaufbau nach zumindest einem der vorhergehenden Ansprüche,
**dadurch gekennzeichnet, dass** die zwei Wabenkerne (1, 2) voneinander verschieden ausgebildet sind, insbesondere unterschiedliche Wabenform, Wabengröße, Wabenausrichtung und/oder Wabenmaterial aufweisen.

4. Wabenkernaufbau nach zumindest einem der vorhergehenden Ansprüche,
**dadurch gekennzeichnet, dass** die Verbindungsschicht (3) eine Fasern umfassende Lage ist, insbesondere ein Fasermaterial aus Gewebe, Gelege, Gestrick-, Matten und / oder Vlies wobei die Fasern beispielsweise Naturfasern wie zum Beispiel Flachsfasern, Hanf oder Bambus oder Glasfasern, Kohlenstofffasern, Kunststofffasern, Keramikfasern oder Textilfasern sein können.

5. Wabenkernaufbau nach zumindest einem der vorhergehenden Ansprüche,
**dadurch gekennzeichnet, dass** die Verbindungsschicht (3) Kurz- und/ oder Langfasern und/ oder Papier umfasst und / oder mit Nano-Partikeln verstärkt ist.

6. Wabenkernaufbau nach zumindest einem der vorhergehenden Ansprüche,
**dadurch gekennzeichnet, dass** die Wabenkerne (1, 2) Papierkerne sind oder Kerne aus Kunststoff, Metall, Holz oder Schaum.

7. Wabenkernaufbau nach zumindest einem der vorhergehenden Ansprüche,
**dadurch gekennzeichnet, dass** die Wabenkerne (1, 2) Stege in bienenwabenförmiger Anordnung aufweisen oder in wellenförmiger Anordnung aufweisen oder rund, dreieckig, rechteckig, quadratisch, trapezförmig oder vieleckig angeordnet sind.

8. Verfahren zur Herstellung eines Wabenkernaufbaus nach zumindest einem der vorhergehenden Ansprüche, umfassend die Schritte
- Bereitstellen der zwei Wabenkerne (1, 2) und der Verbindungsschicht (3),
- Aufbringen von Klebstoff auf die Steg-Enden der beiden Wabenkerne (1, 2),
- Zusammenfügen der Wabenkerne (1, 2) mit der dazwischen angeordneten Verbindungsschicht (3).

9. Verfahren zur Herstellung eines Wabenkernaufbaus nach zumindest einem der vorhergehenden Ansprüche, umfassend die Schritte
- Bereitstellen der zwei Wabenkerne (1, 2) und der Verbindungsschicht (3),
- Aufbringen von Klebstoff auf die Verbindungsschicht (3) im Bereich der Steg-Enden der beiden Wabenkerne (1, 2),
- Zusammenfügen der Wabenkerne (1, 2) mit der dazwischen angeordneten Verbindungsschicht (3).

10. Verfahren nach einem der Ansprüche 8 oder 9,
**dadurch gekennzeichnet, dass** der Klebstoff durch Rollen, Sprühen, Streichen oder Eintauchen aufgebracht wird.

11. Verfahren zur Herstellung eines Sandwichbauteils mit einem Wabenkernaufbau nach zumindest einem der Ansprüche 8 bis 10,
**dadurch gekennzeichnet, dass** nach dem Zusammenfügen der Wabenkerne (1, 2) mit der Verbindungsschicht (3) der Stapel aus Wabenkernen (1, 2) und Verbindungsschicht (3) ein- oder beidseitig mit trockenem Fasermaterial belegt, insbesondere ummantelt, wird und anschließend mit einer Matrix, vorzugsweise mit einer PUR-Matrix getränkt, besprüht und/oder benetzt wird.

12. Verfahren zur Herstellung eines Sandwichbauteils mit einem Wabenkernaufbau nach zumindest einem der Ansprüche 8 bis 10,
**dadurch gekennzeichnet, dass** nach dem Zusammenfügen der Wabenkerne (1, 2) mit der Verbindungsschicht (3) der Stapel aus Wabenkernen (1, 2) und Verbindungsschicht (3) ein- oder beidseitig mit einem mit einer Matrix vorimpregnierten Fasermaterial belegt, insbesondere ummantelt wird.

13. Verfahren nach Anspruch 11 oder 12,
**dadurch gekennzeichnet, dass** der Stapel anschließend in einem, bevorzugt beheizten, Formpresswerkzeug formgepresst wird.

14. Sandwichbauteil, hergestellt nach einem Verfahren nach einem der Ansprüche 11 bis 13.

15. Sandwichbauteil, umfassend einen Wabenkernaufbau nach einem der Ansprüche 1 bis xy, wobei der Wabenkernaufbau ein- oder beidseitig mit einem Fasermaterial belegt, insbesondere ummantelt ist, wobei das Fasermaterial mit einer Matrix impregniert ist.
